# FASCICULE DE BREVET EUROPEEN

(11) **EP 1 810 355 B1**
(45) Date de publication et mention de la délivrance du brevet: **20.08.2008**
(21) Numéro de dépôt: 05801393.9
(22) Date de dépôt: 05.10.2005
(51) Int. Cl.: H01M 2/22, H01M 2/26, H01M 10/04

(54) **MODULE DE BATTERIE COMPRENANT UN ELEMENT DE STOCKAGE D'ENERGIE DONT LE CONTACT EST REALISE PAR SERRAGE DES COUCHES ENTRE ELLES**
BATTERIEMODUL MIT EINEM ENERGIESPEICHERELEMENT, BEI DEM DER KONTAKT DURCH GEGENSEITIGE SCHICHTANSPANNUNG AKTIVIERT WIRD
BATTERY MODULE COMPRISING AN ENERGY STORING ELEMENT WHEREOF THE CONTACT IS ACTIVATED BY MUTUAL LAYER TIGHTENING

(30) Priorité: 06.10.2004 FR 0410522
(43) Date de publication de la demande: 25.07.2007
(73) Titulaire: Batscap, 29500 Ergué-Gabéric (FR)
(72) Inventeur: NEDELEC, Luc, F-29460 L'HOPITAL CAMFROUT (FR); GUIGUEN, Frédéric, F-29170 St EVARZEC (FR)
(74) Mandataire: Texier, Christian
(86) Numéro de dépôt international: PCT/EP2005/055018
(87) Numéro de publication internationale: WO 2006/037790

(56) Documents cités:
- EP-A- 0 140 693
- WO-A-03/094258
- US-A- 4 646 430
- US-A- 5 487 958
- US-A1- 2002 146 620

## Description

La présente invention concerne le domaine des éléments de stockage d'énergie électrique.

Plus précisément encore, la présente invention concerne en particulier les éléments électrochimiques multicouches à base de matériaux polymères comprenant un électrolyte encadré par deux électrodes formant respectivement cathode et anode.

L'invention s'applique notamment, mais non exclusivement, aux dispositifs comprenant une anode à base de lithium.

La présente invention s'applique à la réalisation de condensateurs, super-condensateurs et générateurs ou batteries.

Des exemples de tels éléments électrochimiques pourront être trouvés dans les documents FR-A-2737339, FR-A-2759087, FR-A-2759211, FR-A-2808622.

On connaît les techniques de réalisations d'éléments de stockage d'énergie électrique sous forme d'enroulements ou d'empilements multicouches.

Les éléments de type enroulés sont généralement réalisés à partir d'une pluralité de films monocouche ou multicouches, polymères ou non, rassemblés et superposés pour former un complexe. Dans le cas de réalisation d'éléments, par enroulement, le complexe ainsi obtenu est enroulé sur un mandrin circulaire de révolution ou sur un mandrin plat ou quasi-plat. Lorsque le nombre de tours d'enroulement est suffisant, les couches doivent être coupées transversalement par des moyens de coupe. L'enroulement obtenu est ensuite libéré du mandrin.

Une préoccupation dans le domaine des éléments de stockage d'énergie sous forme d'enroulements ou d'empilements est la réalisation des connectiques électriques permettant notamment un raccordement série/parallèle entre ces ensembles. En effet, ces connectiques doivent permettre de se connecter à certaines couches minces de l'enroulement ou de l'empilement tout en évitant les courts-circuits entre les couches des différents films.

Pour faciliter la réalisation de ces connectiques, une solution consiste, lors de la réalisation de l'enroulement ou de l'empilement, à contrôler le positionnement latéral des films les uns par rapport aux autres. Ainsi, dans l'élément final, certaines couches seront positionnées de manière à ce que l'un de leurs bords « débordent » plus ou moins par rapport aux bords des autres couches.

Cette technique permet par exemple de déposer sur les faces latérales de l'élément un méta!, ce métal étant disposé uniquement sur les bords latéraux de l'une ou une pluralité des couches. Le décalage latéral entre les couches permet en outre de les distinguer les unes des autres en fonction de leur positionnement lors de leur connexion.

Le document US 5 415 954 publié le 16 mai 1995 décrit un générateur lithium-polymère comprenant un élément formé de couches superposées. Dans cet élément, les bords latéraux des couches d'anode en lithium s'étendent au-delà des bords des autres couches. Le contact de sortie des couches d'anode est réalisé par une couche intermédiaire en métal compatible avec le lithium s'étendant transversalement aux bords des couches d'anode et en contact avec celles-ci.

La réalisation d'un contact de sortie est une opération particulièrement délicate car le lithium est compatible avec peu de métaux (cuivre, nickel, acier). En outre, il se prête mal à un assemblage par soudure.

Le document WO 13/094258 publié le 13 novembre 2003 décrit un terminal de collection de courant comprenant deux bras qui viennent enserrer les parties saillantes des couches des éléments pour les maintenir en contact les unes avec les autres.

Le terminal décrit dans ce document nécessite d'être serré au moyen d'un outil de serrage pour être fixé sur les parties saillantes des couches. Si nécessaire, le terminal peut en plus être soudé ou collé sur les parties saillantes des couches.

Un but de l'invention est de proposer une technique pour réaliser un contact dans un élément multicouche pour batterie de manière plus simple et plus fiable qu'avec les techniques de l'art antérieur.

A cet effet, l'invention propose un module pour batterie comprenant au moins un élément formé de couches superposées, enroulées selon un profil aplati, certaines couches présentant des bords qui s'étendent au-delà des bords des autres couches, formant ainsi des parties saillantes. Le module comporte en outre un organe de serrage maintenant les parties saillantes des couches serrées d'au moins un élément les unes contre les autres.

L'organe de serrage est un organe élastique autonome qui assure par lui même, sans aide extérieure, le serrage desdites parties saillantes et sa propre tenue sur celles-ci, et est apte à assurer une connexion électrique desdites couches à un circuit.

A cet effet, la force de serrage de l'organe élastique est calculée pour supporter des efforts de dilatation et de retrait que subit l'élément à chaque cycle de fonctionnement.

Par « organe élastique autonome », on entend dans le cadre de l'invention, un organe apte à être déformé dans une position ouverte dans laquelle les parties saillantes des couches peuvent être introduites dans l'organe, et apte, du fait de son élasticité, à revenir spontanément dans une position de serrage dans laquelle il maintient les parties saillantes des couches serrées les unes contre les autres.

L'invention permet de maintenir les couches entre elles en contact électrique, sans avoir recours à un outil de serrage ou à une soudure.

Cette solution convient particulièrement dans le cas de couches d'anode au lithium. On a en effet constaté que le lithium étant ductile, il procure une bonne liaison entre les couches par adhérence sous l'effet de l'organe de serrage.

De manière avantageuse, l'organe de serrage est en métal. Ainsi, cet organe constitue un contact conducteur permettant de relier électriquement les couches qu'il maintient à un circuit électrique.

Dans une mise en oeuvre de l'invention, l'organe de serrage est formé d'une pince élastique présentant deux mâchoires aptes à enserrer les parties saillantes des couches. Dans le cas de couches de lithium, le lithium étant un matériau ductile, les couches épousent la forme de l'organe, procurant une bonne liaison par adhérence.

L'organe de serrage est un organe élastique qui assure un serrage des parties saillantes sous effort constant quelles que soient les disparités de fabrication des éléments.

Le module pourra en outre présenter les caractéristiques suivantes :
- la pince est formée dans une feuille de métal pliée pour former des mâchoires de serrage,
- les extrémités libres des mâchoires sont repliées vers l'extérieur selon un rayon de courbure supérieur à 0,6 mm,
- les extrémités libres des mâchoires sont repliées à l'équerre et comportent des ouvertures longitudinales oblongues aptes à recevoir des dents d'un outil de mise en place.
- la pince présente une force maximale d'ouverture de 160 N.
- l'organe de serrage (100, 120, 140, 160, 180, 200, 220) est en métal,
- l'organe de serrage est relié à un élément conducteur électrique apte à connecter électriquement les couches maintenues serrées par l'organe de serrage à un circuit,
- l'organe de serrage est apte à assurer sa propre tenue sur les parties saillantes des couches et une connexion électrique de celles-ci pendant une durée supérieure à la durée de vie du module,
- l'organe de serrage exerce sur les parties saillantes des couches une force de serrage supérieure à 50 N,
- l'organe de serrage comprend deux mâchoires munies de griffes aptes à agripper mécaniquement les parties saillantes des couches,
- l'organe de serrage comprend deux mâchoires présentant des dents,
- l'organe de serrage maintient simultanément les couches de plusieurs éléments serrées les unes contre les autres,
- l'organe de serrage est bimétallique, constitué d'une feuille en un matériau à hautes propriétés élastiques, tel qu'un cupronickel, entourant de façon solidaire une feuille en un matériau à haute conductivité électrique, tel qu'un maillechort,
- une feuille de cuivre est interposée entre l'organe de serrage et les parties saillantes des couches,
- l'organe de serrage présente au niveau d'une extrémité longitudinale des fentes longitudinales définissant des flasques de protection sans serrage pour les couches serrées par l'organe de serrage,
- l'organe de serrage présente sur une partie externe un revêtement isolant électrique apte à éviter des courts-circuits avec un élément adjacent,
- l'organe de serrage comprend une pince élastique enserrant les parties saillantes d'une ou plusieurs couche(s) d'anode.
- l'organe de serrage comprend une pince élastique enserrant les parties saillantes d'une ou plusieurs couche(s) de collecteur,
- l'organe de serrage comprend une double pince enserrant d'un côté les parties saillantes d'une ou de plusieurs couches d'anode d'un premier élément et de l'autre côté les parties saillantes d'une ou de plusieurs couche(s) de collecteur d'un deuxième élément, les deux éléments se trouvant alors reliés électriquement en série,
- l'organe de serrage comprend une double pince enserrant de chaque côté les parties saillantes d'une ou de plusieurs couche(s) d'anode de deux éléments voisins pour les relier électriquement en parallèle,
- l'organe de serrage comprend deux pinces solidaires enserrant respectivement les collecteurs de deux éléments pour relier électriquement ces éléments en parallèle,
- l'organe de serrage est un organe élastique qui assure un serrage des parties saillantes sous effort constant quelles que soient les disparités de fabrication des éléments,
- l'organe de serrage présente un angle d'accostage sur les parties saillantes des couches compris entre 10 ° et 30°.

L'invention concerne également un procédé de réalisation de connexion électrique sur un module pour batterie comprenant au moins un élément formé de couches superposées, enroulées selon un profil aplati, certaines couches présentant des bords qui s'étendent au-delà des bords des autres couches, formant ainsi des parties saillantes, ledit procédé comprenant la mise en place d'un organe de serrage maintenant les parties saillantes des couches serrées les unes contre le autres.

L'organe de serrage se présente sous la forme d'un organe élastique autonome apte à assurer par lui même, sans aide extérieure, le serrage desdites parties saillantes et sa propre tenue sur celles-ci, et est apte à assurer une connexion électrique des couches à un circuit.

Dans une mise en oeuvre de ce procédé, l'organe de serrage étant formé d'une pince élastique présentant deux mâchoires aptes à enserrer les parties saillantes des couches, le procédé comprend les étapes consistant à:
- écarter les mâchoires de la pince élastique à l'aide d'un outil formé de deux éléments, chaque élément étant apte à être engagé dans un crochet ou des ouvertures de l'une des mâchoires,
- puis introduire les parties saillantes des couches entre les mâchoires,
- relâcher les mâchoires de sorte qu'elles viennent enserrer les parties saillantes.

Dans une mise en oeuvre de ce procédé, l'outil comporte une butée empêchant l'écartement des mâchoires de la pince au delà de la limite élastique du matériau qui la compose.

D'autres caractéristiques et avantages ressortiront encore de la description qui suit, laquelle est purement illustrative et non limitative et doit être lue en regard de figures annexées parmi lesquelles :
- la figure 1 représente schématiquement une vue en coupe transversale selon AA de la figure 2 ou 3 d'un exemple de structure de film complexe de type sandwich destiné à la formation d'un élément de batterie,
- la figure 2 représente schématiquement un élément formé par enroulement,
- la figure 3 représente schématiquement un élément formé par empilement,
- la figure 4 représente schématiquement une vue en coupe transversale (selon la ligne de coupe A-A de la figure 2 ou de la figure 3) d'un élément formé par enroulement ou empilement,
- la figure 5 représente schématiquement une étape de mise en place d'un organe de serrage des couches d'anode d'un élément de batterie,
- la figure 6 représente schématiquement l'élément de batterie dont les couches d'anode sont maintenues serrées les unes contre le autres par l'organe de serrage,
- les figures 7 à 10 représentent schématiquement en coupe transversale des exemples d'organes de serrage pouvant être utilisés dans le cadre de l'invention,
- la figure 11 représente schématiquement des couches d'anode maintenues serrées les unes contre les autres par un organe de serrage, une feuille de métal étant insérée entre l'organe et les couches,
- la figure 12 représente schématiquement en perspective un exemple d'organe de serrage sur lequel a été fixé un conducteur de connexion,
- la figure 13 représente schématiquement en perspective un autre exemple d'organe de serrage présentant des dents,
- la figure 14 représente schématiquement en perspective une série d'éléments connectés électriquement en parallèle par un même organe de serrage,
- la figure 15 représente schématiquement un exemple d'organe de serrage double destiné à la réalisation de connexion entre éléments,
- la figure 16 représente schématiquement un exemple d'assemblage d'éléments de batterie dans lequel les éléments sont connectés en série,
- la figure 17 représente schématiquement un exemple d'assemblage d'éléments de batterie dans lequel les éléments sont connectés en parallèle,
- la figure 18 représente schématiquement une vue en coupe de deux éléments de batterie connectés en parallèle par un même élément de serrage, comme montré sur la figure 17,
- les figures 19 à 21 représentent des exemples d'assemblages d'éléments dans un module de batterie,
- la figure 22 représente schématiquement en perspective un exemple d'organe de serrage dans une variante comportant des orifices oblongs adaptés pour leur mise en place par un outil et l'outil de mise en place associé,
- la figure 23 représente schématiquement en perspective un exemple d'organe de serrage,
- la figure 24 représente schématiquement en perspective un exemple d'organe de serrage dans une variante comportant des flasques de protection.

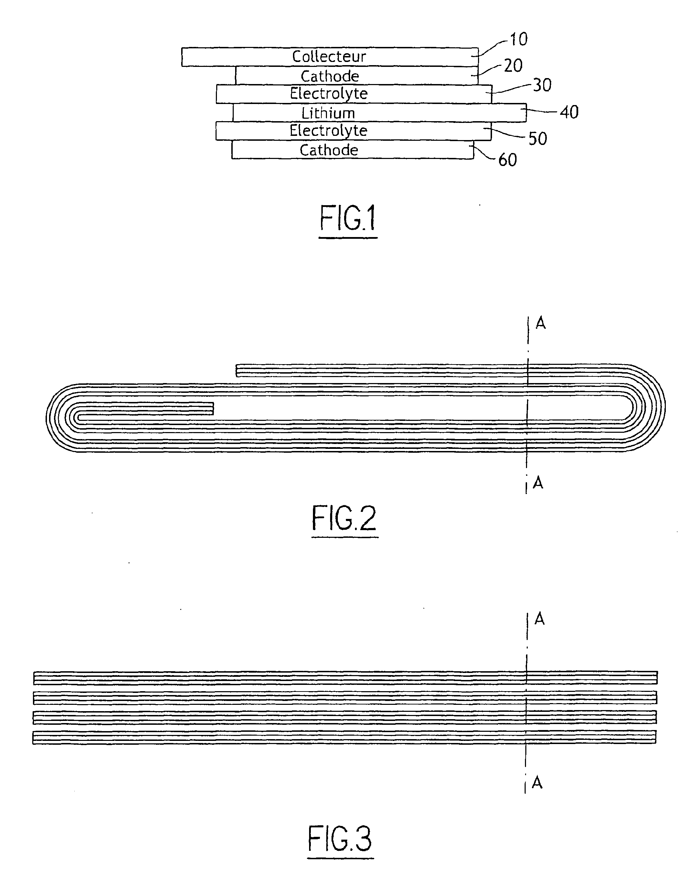

La figure 1 représente (en coupe transversale) une structure de film complexe de type sandwich destiné à la formation d'un élément de batterie. Le film complexe comprend une couche de collecteur 10 (par exemple en aluminium ou Bécromal), une couche de cathode 20 (par exemple à base de POE (polyoxyéthylène) et de sel de lithium), une couche d'électrolyte 30, une couche d'anode 40 (par exemple en lithium), une couche d'électrolyte 50 et une couche de cathode 60. Les couches d'électrolytes 30 et 50 sont par exemple à base de LiV₃O₈ ou V₂O₅ et POE. Le collecteur en aluminium 10 est de préférence revêtu d'une barrière anticorrosion, par exemple à base de nitrure de Ti ou autre, graphite par exemple. On notera que les bords des couches d'électrolyte 50 et 30 sont superposés. Par ailleurs, la couche d'anode 40 présente un bord en retrait des électrolytes 50 et 30 sur le côté émergeant du collecteur 10, tandis qu'elle dépasse des électrolytes 30, 50 sur le côté opposé.

La figure 2 représente schématiquement un élément obtenu par enroulement du film complexe de la figure 1 sur un mandrin sensiblement plat (pour des raisons de simplification, le nombre de spires représentées est inférieur à la réalité).

La figure 3 représente schématiquement un élément obtenu par empilement de plusieurs films complexes présentant une structure telle que celle représentée à la figure 1 (pour des raisons de simplification, le nombre de films empilés est inférieur à la réalité).

Les éléments des figures 2 et 3 sont destinés à être intégrés dans un module de batterie.

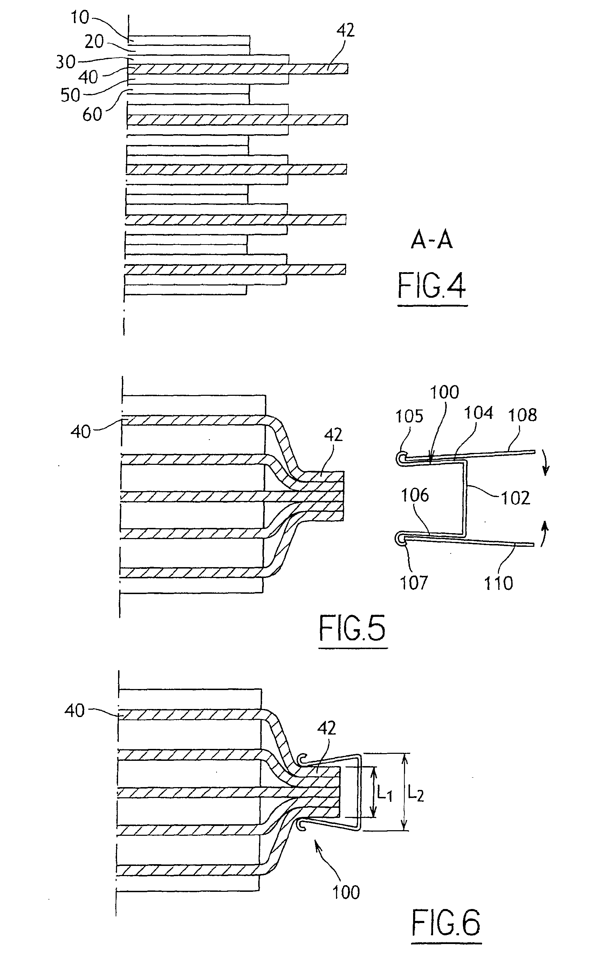

La figure 4 représente une vue en coupe transversale selon la direction A-A un élément tel que représenté aux figures 2 et 3. Un tel élément est formé d'une superposition de plusieurs couches complexes comprenant chacune une couche de collecteur 10, une couche de cathode 20, une couche d'électrolyte 30, une couche d'anode 40, une couche d'électrolyte 50 et une couche de cathode 60. Les couches d'anode 40 (hachurées) présentent des bords qui s'étendent au-delà des bords des autres couches, formant ainsi des parties saillantes 42. Ces parties saillantes 42 sont destinées recevoir des moyens de connexion permettant de les relier électriquement à un circuit.

La figure 5 représente une étape de mise en place d'un organe de serrage 100 destiné à maintenir les parties saillantes 42 des couches d'anode 40 serrées les unes contre le autres. Sur cette figure, l'organe 100 est une pince élastique.

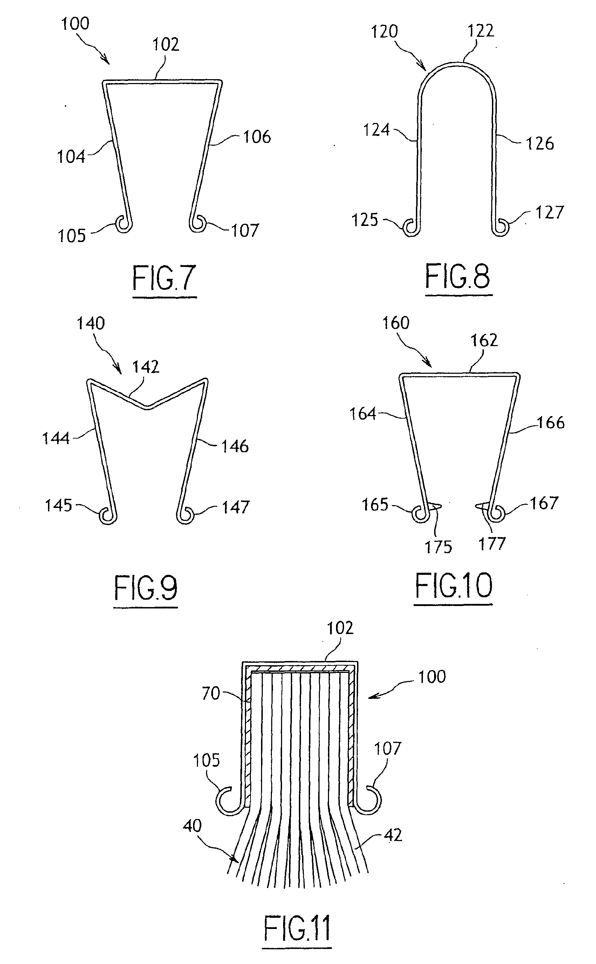

Une telle pince est représentée sur la figure 7, elle est formée d'un profilé présentant une section de forme générale symétrique trapézoïdale. Le profilé est obtenu à partir d'une feuille de métal élastique pliée selon deux axes parallèles. La pince comprend une portion arrière 102 s'étendant entre les deux axes de pliage et deux portions latérales 104 et 106 situées de part et d'autre de la portion arrière 102. Les deux portions latérales 104 et 106 s'étendent l'une en face de l'autre pour former les deux « mâchoires ». Ces deux portions latérales 104 et 106 ne sont pas parallèles mais orientées de manière à se rapprocher l'une de l'autre au niveau de leur bord libre. Chaque portion latérale 104, 106 présente un crochet 105, 107 formé par recourbement vers l'extérieur de son bord libre.

Ainsi que représenté sur la figure 5, les crochets 102 et 107 sont aptes à recevoir un outil permettant d'écarter les deux mâchoires 104 et 106 pour introduire entre elles les parties saillantes 42 des couches d'anode 40. Un tel outil comprend deux éléments 108 et 110. Chaque élément 108, 110 présente une extrémité destinée à être engagée dans l'un des crochets 105, 107 et une extrémité libre. Lorsque les extrémités libres des deux éléments 108 et 110 sont pressées l'une vers l'autre, les deux éléments viennent en appui sur les pliures de la pince 100 et les mâchoires de la pince 100 s'écartent par effet de levier.

Les parties saillantes 42 des couches d'anode sont alors facilement introduites entre les mâchoires 104 et 106. Les mâchoires sont ensuite relâchées et viennent enserrer les parties saillantes 42.

Ainsi que représenté sur la figure 6, une fois en place, du fait de son élasticité, la pince 100 maintient les parties saillantes 42 des couches d'anode serrées les unes contre les autres. De préférence, ainsi qu'illustré sur cette figure, la largeur L₂ de la portion arrière de la pince 100 est plus importante que l'épaisseur L₁ de l'ensemble des couches d'anode 40 enserrées par la pince.

Comme on le comprend sur la figure 6, l'organe de serrage formé par la pince élastique 100 est un organe autonome, c'est à dire qu'il assure par lui même, sans aide extérieure, le serrage des parties saillantes 42 et sa propre tenue sur celles-ci.

En outre, cet organe est apte à assurer une connexion électrique des couches d'anode 40 à un circuit. De manière préférentielle, l'organe de serrage est apte à assurer sa propre tenue et une connexion électrique pendant une durée supérieure à la durée de vie du module de batterie.

De préférence, l'organe de serrage exerce sur les parties saillantes 42 des couches 40 une force de serrage supérieure à 50 N. La force de serrage de l'organe élastique est calculée pour, d'une part, supporter les efforts de dilatation et de retrait qui subit l'élément à chaque cycle de fonctionnement et permettre à la pince d'assurer sa tenue sur l'empilement pendant une durée supérieure à la durée de vie admissible du module de batterie, et d'autre part, ne pas risquer d'endommager le matériau de cathode qu'elle vient serrer.

En outre, la pince 100 présente une force maximale d'ouverture de 160N. Cette caractéristique permet de ne pas dépasser la limite élastique du matériau constituant la pince, et de ce fait ne pas risquer d'amoindrir sa tenue en serrage élastique pendant le fonctionnement de la batterie.

Les figures 8, 9 et 10 représentent des variantes de la pince de la figure 7. Sur la figure 8, la pince 120 présente une section de forme générale en U. Elle comprend une portion arrière 122 courbe à partir de laquelle s'étendent deux portions latérales 124 et 126 ainsi que deux crochets 125 et 127.

Sur la figure 9, !a pince 140 est similaire à celle de la figure 7 excepté qu'elle présente une portion arrière 142 courbée vers l'intérieur de la pince. Cette caractéristique facilite l'ouverture de la pince à l'aide d'un outil.

Sur la figure 10, la pince 160 est similaire à celle de la figure 7, excepté qu'elle présente des griffes 175 et 177 disposées sur chaque mâchoire de la pince, en face l'une de l'autre et orientées vers l'intérieur de la pince. Ces griffes 175 et 177 sont de préférence positionnées à proximité des bords libres des portions latérales 164 et 165 dans la zone où la pince vient en appui sur les couches d'anode. Ces griffes permettent d'agripper mécaniquement les couches d'anode, voire de les transpercer pour mieux les maintenir en place dans la pince et améliorer encore la qualité de la connexion de la pince sur le matériau de l'anode pendant la durée de vie de la batterie.

De manière préférentielle, la pince 100, 120, 140 ou 160 est réalisée en métal cuivreux ressort (par exemple formé d'un alliage Cuivre-Beryllium). La pince joue alors le rôle de contact conducteur permettant de relier électriquement les couches d'anode qu'elle maintient serrées à un circuit électrique.

Toutefois, ainsi que représenté sur la figure 11, la pince 100 qui enserre les portions saillantes 42 des couches d'anode 40 peut être réalisée en un métal acier ressort ou dans un autre métal. Dans cette configuration, une feuille de cuivre 70 a été interposée entre la pince 100 et les couches d'anode. Cette feuille de cuivre améliore la conduction électrique entre les couches d'anode 40 et la pince 100. En outre, la feuille de cuivre 70 évite toute réaction chimique néfaste entre les couches d'anode 40 et la pince 100. Cette caractéristique est particulièrement utile dans le cas où les couches d'anode sont en lithium et la pince est en un matériau non compatible chimiquement avec le lithium.

En variante, il est possible de réaliser une pince en bimétal formée par une feuille de métal ressort recouverte sur sa surface intérieure d'une couche de cuivre (ou autre métal compatible avec les couches d'anode) en contact avec les couches d'anode.

En variante, la pince peut être réalisée dans un matériau à base de cupronickel ou en maillechort, qui allient de bonnes propriétés élastiques et une bonne qualité de contact électrique.

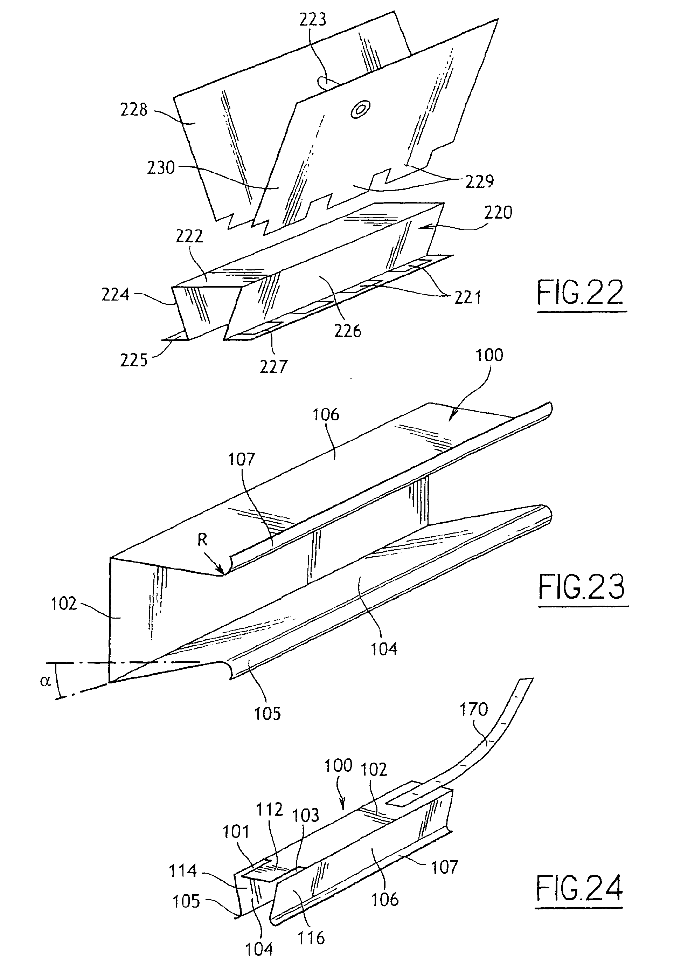

La figure 22 représente schématiquement une pince 220 et un outil de mise en place associé formé de deux éléments 228, 230. La pince 220 est formée d'un profilé obtenu à partir d'une feuille de métal pliée selon deux axes parallèles. La pince comprend une portion arrière 222 s'étendant entre les deux axes de pliage et deux portions latérales 224 et 226 situées de part et d'autre de la portion arrière 222. Les bords libres des portions latérales 224 et 226 sont repliés à l'équerre vers l'extérieur de la pince 220 de manière à former deux pattes latérales 225 et 227. La pince présente ainsi une section en forme générale de Ω.

Les deux pattes latérales 225 et 227 comportent des ouvertures longitudinales oblongues 221 s'étendant dans une direction longitudinale du profilé. Ces ouvertures sont destinées à recevoir des dents 229 des éléments 228, 230 de l'outil de mise en place.

Les dents 229 des éléments sont engagées dans les ouvertures 221. Lorsque les extrémités libres des deux éléments 228 et 230 sont pressées l'une vers l'autre, les deux éléments viennent en appui sur les pliures de la pince 220 et les mâchoires de la pince 220 s'écartent par effet de levier. Une butée 223 disposée entre les éléments 228 et 230 empêche l'écartement des mâchoires 224, 226 de la pince 220 au-delà de la limite élastique du matériau qui la compose.

Ce système de pattes latérales avec des ouvertures longitudinales et d'outil à dents permet à la fois l'ouverture de la pince et la préhension ou la manipulation de la pince par l'outil.

La figure 23 représente en perspective la pince 100 de la figure 7. Le rayon R est le rayon de courbure des crochets 105 et 107 formés par recourbement vers l'extérieur des bords libres des portions latérales 104 et 106. Le rayon de courbure R est de préférence supérieur à 0,6 mm. Un tel rayon de courbure limite le fluage des couches d'anode 40 enserrées dans la pince 100. Ce rayon de courbure R est prévu quelle que soit la forme du recourbement des extrémités libres des mâchoires et qu celles-ci aient ou non des ouvertures oblongues pour la prise de l'outil.

Sur cette figure, l'angle α est l'angle que fait une portion latérale 104 par rapport au plan de symétrie longitudinal de la pince. Cet angle α est l'angle d'accostage de la pince 100 sur les couches d'anode ; il définit la direction des portions latérales 104 et 106 de la pince 100 par rapport aux couches d'anode enserrées. L'angle d'accostage α est de préférence compris entre 10° et 30° pour assurer une bonne prise du serrage de la pince sur l'élément et éviter des glissements successifs de la pince sur celui-ci lorsque l'élément est soumis à des mouvements de gonflements/rétractions lors de sa vie en fonctionnement.

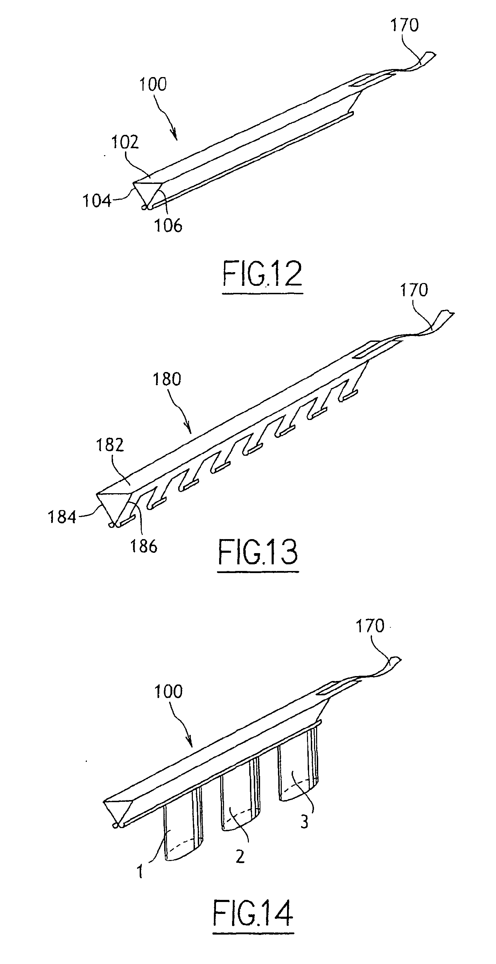

La figure 24 représente schématiquement une pince 100 conforme à la pince de la figure 12, excepté qu'elle comprend deux fentes longitudinales 101 et 103 pratiquées le long des axes de pliage (ou arêtes) de la pince, au niveau de l'une des extrémités de la pince 100. Les deux fentes 101 et 103 génèrent des zones 112, 114 et 116 de portion arrière 102 et de portions latérales 104 et 106 déconnectées les unes des autres. Les zones 112, 114 et 116 forment des flasques de protection qui ne serrent pas les parties saillantes des couches.

La figure 12 représente en perspective la pince 100 de la figure 7. La connexion de la pince 100 à un circuit est réalisée par un ruban conducteur électrique 170 (fil, tresse, feuillard, etc.) fixé sur la portion arrière 102 de la pince 100 (au moyen d'une soudure, d'un sertissage, d'une brasure tendre, etc.).

La figure 13 représente en perspective une pince 180 dont la génératrice d'appui sur les couches d'anode est discontinue. Les portions latérales 184 et 186 de la pince 180, formant les mâchoires, sont découpées en créneaux de manière à former des dents. Cette caractéristique améliore le maintien en place des couches d'anode dans la pince.

La figure 14 représente schématiquement une pince 100 utilisée pour la connexion d'éléments de batterie enroulés 1, 2, 3 entre eux. Les éléments 1, 2 et 3 ont leur anode connectée à une même borne par l'intermédiaire de la pince 100 et du conducteur 170.

Bien que décrite jusqu'ici pour le serrage d'empilements de films d'anodes en lithium, il est bien évident que les pinces de l'invention peuvent également être utilisées pour le serrage des collecteurs de cathode des éléments. Cette particularité permet de réaliser facilement des connexions en série ou en parallèle d'éléments entre eux, ainsi qu'il sera montré dans la suite de la description.

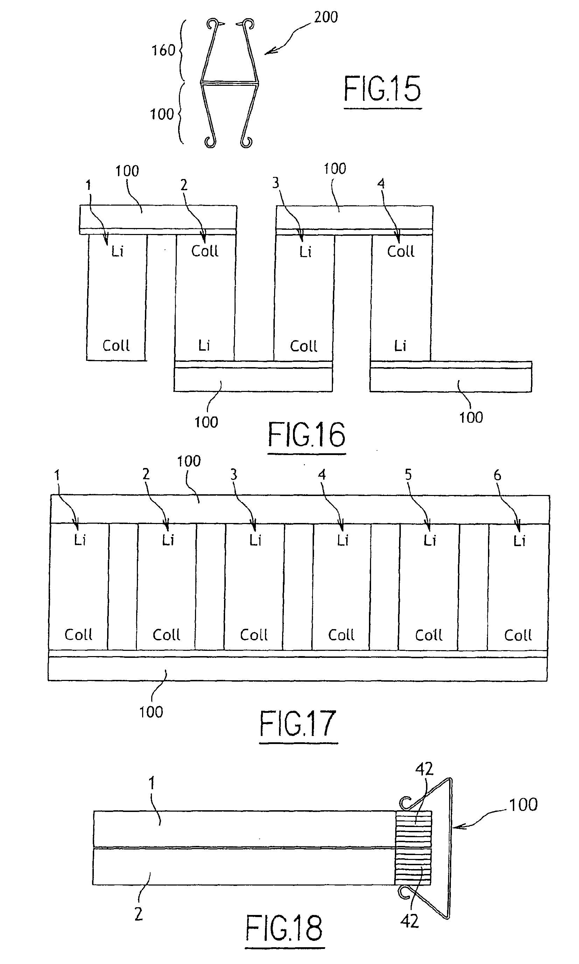

La figure 15 représente une pince double 200 constituée de deux pinces élémentaires raccordées par leur portion arrière. La pince double 200 est formée d'une pince trapézoïdale simple 100 du type représenté à la figure 7 et d'une pince trapézoïdale à griffes 160 du type représenté à la figure 10. La pince trapézoïdale 100 est plus particulièrement adaptée au serrage de couches d'anode en lithium tandis que la pince à griffes 160 est plus particulièrement adaptée au serrage de couches de collecteur en Bécromal. Les deux pinces élémentaires 100 et 160 sont maintenues entre elles par soudage ou sertissage. La pince double 200 ainsi formée permet le raccordement électrique d'une ou de plusieurs couches(s) d'anode d'un élément de batterie à une ou plusieurs couche(s) de collecteur d'un autre élément de batterie, ce qui permet une mise en série de ces éléments de batterie.

D'autres types de pinces doubles peuvent être envisagés. On peut réaliser une double pince enserrant d'un côté les parties saillantes d'une ou de plusieurs couches d'anode et de l'autre côté les parties saillantes d'une ou de plusieurs couche(s) de cathode. On peut également réaliser une double pince enserrant de chaque côté les parties saillantes d'une ou de plusieurs couche(s) d'anode. Ou encore deux pinces solidaires enserrant respectivement deux cathodes.

La figure 16 représente un exemple d'assemblage plan d'éléments de batterie 1, 2, 3, 4 en série. Dans cet assemblage, les éléments sont disposés tête-bêche à plat les uns à côté des autres, parallèlement les uns aux autres, leurs côtés desquels débordent les couches d'anode au lithium et de collecteur étant alternativement orientés dans un sens puis dans l'autre. L'anode d'un élément est reliée électriquement au collecteur de l'élément suivant par l'intermédiaire d'une pince 100.

La figure 17 représente un exemple d'assemblage plan d'éléments de batterie 1, 2, 3, 4, 5, 6 en parallèle. Dans cet assemblage, les éléments sont disposés à plat, les uns à côté des autres, parallèlement les uns aux autres, leurs côtés desquels débordent les couches d'anode et de collecteur étant orientés dans le même sens. Les anodes des éléments de batterie sont reliées électriquement entre elles par l'intermédiaire d'une même pince 100. De même les collecteurs des éléments de batterie sont reliés électriquement entre eux par l'intermédiaire d'une autre pince 100.

Ainsi que représenté sur la figure 18, deux éléments 1 et 2 ou plus peuvent être superposés et reliés par une même pince 100, ce qui permet de connecter les deux éléments en parallèle, si les deux éléments sont disposés dans le même sens (collecteur du même côté) ou de les relier en parallèle si les éléments sont disposés côte à côte tête-bêche.

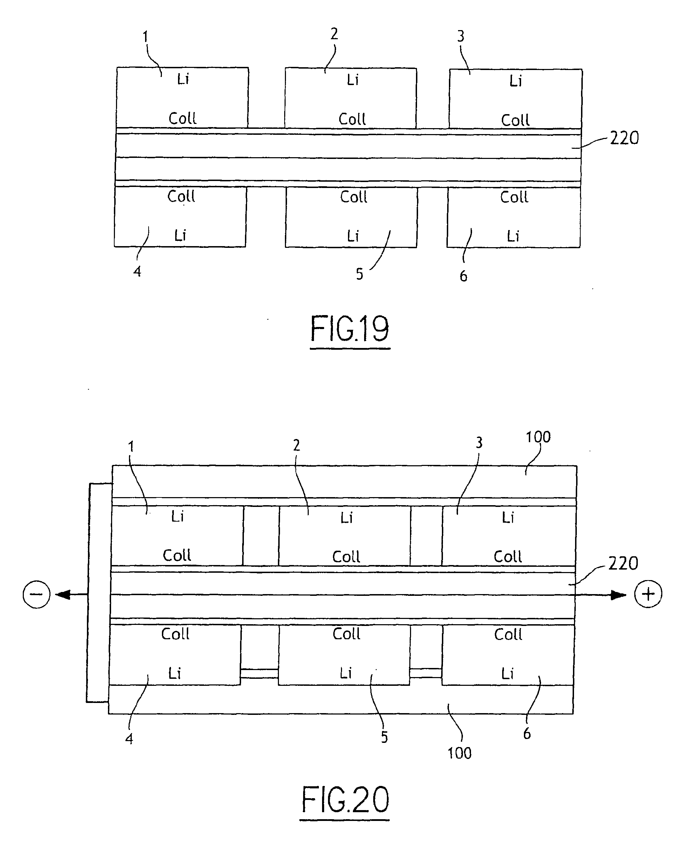

La figure 19 représente de manière schématique un exemple d'assemblage dans lequel, une pince double 220 du type de celle représentée à la figure 15 relie électriquement un ensemble d'éléments 1, 2, 3, 4, 5 et 6 disposés à plat, par leurs collecteurs.

La figure 20 représente de manière schématique un exemple d'assemblage en parallèle. Dans cet assemblage, une pince double 220 du type de celle représentée à la figure 15 relie électriquement un ensemble d'éléments de batterie 1, 2, 3, 4, 5 et 6 disposés à plat, par leurs collecteurs, comme sur la figure 19. En outre, des pinces simples 100 du type de celle représentée à la figure 7 relient électriquement les éléments 1, 2, 3 et 4, 5, 6 par leurs anodes. La pince 220 est reliée électriquement à la borne plus (+) de la batterie tandis que les pinces 100 sont reliées électriquement à la borne moins (-) de la batterie.

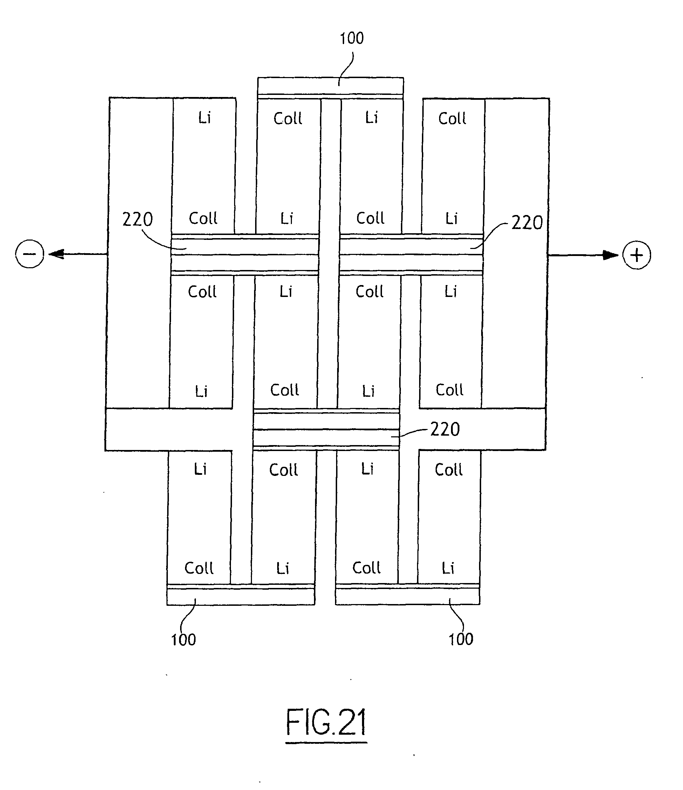

La figure 21 représente de manière schématique un exemple d'assemblage plan série-parallèle mixte formant un module de batterie. Dans cet assemblage, les pinces 100 et 220 permettent de réaliser des étages de batterie plans dont on peut adapter la puissance et la tension de sortie pour un encombrement identique de l'étage plan, quels que soient la puissance et la tension choisis pour l'étage.

En outre, les pinces 100 et 220 présentent l'avantage complémentaire de rigidifier l'ensemble qui peut ainsi être aisément manipulé lors de son montage dans une batterie.

## Revendications

1. Module pour batterie comprenant au moins un élément (1, 2, 3, 4) formé de couches (10, 20, 30, 40, 50, 60) superposées enroulées selon un profil aplati, certaines couches (10, 40) présentant des bords qui s'étendent au-delà des bords des autres couches (20, 30, 50, 60), formant ainsi des parties saillantes (12 ; 42), et un organe de serrage (100, 120, 140, 160, 180, 200, 220) maintenant les parties saillantes (12 ; 42) de certaines couches (10 ; 40) serrées les unes contre le autres, **caractérisé en ce que** l'organe de serrage est un organe élastique autonome qui assure par lui même, sans aide extérieure, le serrage desdites parties saillantes (12 ; 42) et sa propre tenue sur celles-ci, et est apte à assurer une connexion électrique desdites couches (10 ; 40) à un circuit.

2. Module selon la revendication 1, **caractérisé en ce que** l'organe de serrage (100, 120, 140, 160, 180, 200, 220) est formé d'une pince élastique présentant deux mâchoires aptes à enserrer les parties saillantes (12 ; 42) des couches (10 ; 40).

3. Module selon la revendication 2, **caractérisé en ce que** la pince est formée dans une feuille de métal pliée pour former des mâchoires de serrage.

4. Module selon la revendication 3, **caractérisé en ce que** les extrémités libres des mâchoires sont repliées vers l'extérieur selon un rayon de courbure supérieur à 0,6 mm.

5. Module selon l'une quelconque des revendications 2 à 4, **caractérisé en ce que** les extrémités libres des mâchoires sont repliées à l'équerre et comportent des ouvertures longitudinales (221) oblongues aptes à recevoir des dents (229) d'un outil de mise en place (228, 230).

6. Module selon l'une des revendications 2 à 5, **caractérisé en ce que** la pince présente une force maximale d'ouverture de 160 N.

7. Module selon l'une des revendications 1 à 6, **caractérisé en ce que** l'organe de serrage (100, 120, 140, 160, 180, 200, 220) est en métal.

8. Module selon la revendication 7, **caractérisé en ce que** l'organe de serrage est relié à un élément conducteur électrique (170) apte à connecter électriquement les couches (10 ; 40) maintenues serrées par l'organe de serrage (100, 120, 140, 160, 180, 200, 220) à un circuit.

9. Module selon l'une des revendications qui précèdent, **caractérisé en ce que** l'organe de serrage est apte à assurer sa propre tenue sur les parties saillantes (12; 42) des couches (10; 40) et une connexion électrique de celles-ci pendant une durée supérieure à la durée de vie du module.

10. Module selon l'une des revendications qui précèdent, **caractérisé en ce que** l'organe de serrage (100, 120, 140, 160, 180, 200, 220) exerce sur les parties saillantes (12; 42) des couches (10; 40) une force de serrage supérieure à 50 N.

11. Module selon l'une quelconque des revendications qui précèdent, **caractérisé en ce que** l'organe de serrage (160) comprend deux mâchoires munies de griffes (175, 177) aptes à agripper mécaniquement les parties saillantes (12; 42) des couches (10; 40).

12. Module selon l'une des revendications qui précèdent, **caractérisé en ce que** l'organe de serrage (180) comprend deux mâchoires présentant des dents.

13. Module selon l'une des revendications qui précèdent, **caractérisé en ce que** l'organe de serrage (100, 120, 140, 160, 180, 200, 220) maintient simultanément les couches de plusieurs éléments serrées les unes contre les autres.

14. Module selon l'une des revendications qui précèdent, **caractérisé en ce que** l'organe de serrage (100, 120, 140, 160, 180, 200, 220) est bimétallique, constitué d'une feuille en un matériau à hautes propriétés élastiques, tel qu'un cupronickel, entourant de façon solidaire une feuille en un matériau à haute conductivité électrique, tel qu'un maillechort.

15. Module selon l'une des revendications qui précèdent, **caractérisé en ce que** une feuille de cuivre (70) est interposée entre l'organe de serrage (100, 120, 140, 160, 180, 200, 220) et les parties saillantes (12 ; 42) des couches (10 ; 40).

16. Module selon l'une des revendications qui précèdent, **caractérisé en ce que** l'organe de serrage (100) présente au niveau d'une extrémité longitudinale des fentes longitudinales (101, 103) définissant des flasques de protection (112, 114, 116) sans serrage pour les couches serrées par l'organe de serrage.

17. Module selon l'une des revendications qui précèdent, **caractérisé en ce que** l'organe de serrage présente sur une partie externe (102, 104, 106) un revêtement isolant électrique apte à éviter des courts-circuits avec un élément adjacent.

18. Module selon l'une des revendications qui précèdent, **caractérisé en ce que** l'organe de serrage (100, 120, 140, 160, 180, 200, 220) comprend une pince élastique enserrant les parties saillantes d'une ou plusieurs couche(s) d'anode.

19. Module selon l'une des revendications qui précèdent, **caractérisé en ce que** l'organe de serrage (100, 120, 140, 160, 180, 200, 220) comprend une pince élastique enserrant les parties saillantes d'une ou plusieurs couche(s) de collecteur (10).

20. Module selon l'une des revendications qui précèdent, **caractérisé en ce que** l'organe de serrage (100, 120, 140, 160, 180, 200, 220) comprend une double pince enserrant d'un côté les parties saillantes d'une ou de plusieurs couches d'anode d'un premier élément et de l'autre côté les parties saillantes d'une ou de plusieurs couche(s) de collecteur (10) d'un deuxième élément, les deux éléments se trouvant alors reliés électriquement en série.

21. Module selon l'une des revendications qui précèdent, **caractérisé en ce que** l'organe de serrage (100, 120, 140, 160, 180, 200, 220) comprend une double pince enserrant de chaque côté les parties saillantes d'une ou de plusieurs couche(s) d'anode de deux éléments voisins pour les relier électriquement en parallèle.

22. Module selon l'une des revendications qui précèdent, **caractérisé en ce que** l'organe de serrage (100, 120, 140, 160, 180, 200, 220) comprend deux pinces solidaires enserrant respectivement les collecteurs de deux éléments pour relier électriquement ces éléments en parallèle.

23. Module selon l'une des revendications qui précèdent, **caractérisé en ce que** l'organe de serrage est un organe élastique qui assure un serrage des parties saillantes (12 ; 42) sous effort constant quelles que soient les disparités de fabrication des éléments.

24. Module selon l'une des revendications qui précèdent, **caractérisé en ce que** l'organe de serrage présente un angle d'accostage sur les parties saillantes (12 ; 42) des couches (10 ; 40) compris entre 10° et 30°.

25. Procédé de réalisation de connexion électrique sur un module pour batterie comprenant au moins un élément (1, 2, 3, 4) formé de couches (10, 20, 30, 40, 50, 60) superposées enroulées selon un profil aplati, certaines couches (10, 40) présentant des bords qui s'étendent au-delà des bords des autres couches (20, 30, 50, 60), formant ainsi des parties saillantes (12 ; 42), ledit procédé comprenant la mise en place d'un organe de serrage (100, 120, 140, 160, 180, 200, 220) maintenant les parties saillantes (12 ; 42) de certaines couches (10 ; 40) serrées les unes contre le autres, ledit organe de serrage se présentant sous la forme d'un organe élastique autonome apte à assurer par lui même, sans aide extérieure, le serrage desdites parties saillantes et sa propre tenue sur celles-ci, et est apte à assurer une connexion électrique des couches à un circuit.

26. Procédé selon la revendication 25, **caractérisé en ce que** l'organe de serrage (100, 120, 140, 160, 180, 200, 220) étant formé d'une pince élastique présentant deux mâchoires aptes à enserrer les parties saillantes (12 ; 42) des couches (10 ; 40), ledit procédé comprend les étapes consistant à :
- écarter les mâchoires de la pince élastique à l'aide d'un outil formé de deux éléments (108, 110), chaque élément (108, 110) étant apte à être engagé dans un crochet (125, 127) ou des ouvertures (221) de l'une des mâchoires (104, 106 ; 124, 126 ; 144, 146 ; 164, 166 ; 224, 226),
- puis introduire les parties saillantes (12 ; 42) des couches (10 ; 40) entre les mâchoires (104, 106 ; 124, 126 ; 144, 146 ; 164, 166 ; 224, 226),
- relâcher les mâchoires (104, 106 ; 124, 126 ; 144, 146 ; 164, 166 ; 224, 226) de sorte qu'elles viennent enserrer les parties saillantes (12 ; 42).

27. Procédé selon la revendication 26, **caractérisé en ce que** l'outil comporte une butée (223) empêchant l'écartement des mâchoires de la pince au delà de la limite élastique du matériau qui la compose.

## Claims

1. A battery module comprising at least one element (1, 2, 3, 4) formed with superimposed layers (10, 20, 30, 40, 50, 60) wound according to a flattened profile, some layers (10, 40) having edges extending beyond the edges of the other layers (20, 30, 50, 60), thus forming projecting parts (12; 42), and a tightening member (100, 120, 140, 160, 180, 200, 220) maintaining the projecting parts (12; 42) of some layers (10; 40) tightly close together, **characterized in that** the tightening member is a self-contained elastic member which by itself without any external aid, provides for the tightening of said projecting parts (12; 42), and its own grip thereon, and is adapted to provide an electrical connection of said layers (10; 40) to a circuit.

2. The module according to claim 1, **characterized in that** the tightening member (100, 120, 140, 160, 180, 200, 220) is formed with an elastic clamp having two jaws capable of clasping the projecting parts (12; 42) of the layers (10; 40).

3. The module according to claim 2, **characterized in that** the clamp is formed in a folded metal foil in order to form tightening jaws.

4. The module according to claim 3, **characterized in that** the free ends of the jaws are folded back outwards along a radius of curvature larger than 0.6 mm.

5. The module according to any of claims 2 to 4, **characterized in that** the free ends of the jaws are folded at right angles and include longitudinal oblong apertures (221) capable of receiving the teeth (229) of a placement tool (228, 230).

6. The module according to any of claims 2 to 5, **characterized in that** the clamp has a maximum opening force of 160 N.

7. The module according to any of claims 1 to 6, **characterized in that** the tightening member (100, 120, 140, 160, 180, 200, 220) is in metal.

8. The module according to claim 7, **characterized in that** the tightening member is connected to an electric conductor element (170) capable of electrically connecting the layers (10; 40) maintained tightly close together by the tightening member (100, 120, 140, 160, 180, 200, 220) to a circuit.

9. The module according to any of the preceding claims, **characterized in that** the tightening member is adapted to provide for its own grip on the projecting parts (12; 42) of the layers (10; 40) and electric connection of the latter for a period larger than the life-time of the module.

10. The module according to any of the preceding claims, **characterized in that** the tightening member (100, 120, 140, 160, 180, 200, 220) exerts a tightening force larger than 50 N on the projecting parts (12; 42) of the layers (10; 40).

11. The module according to any of the preceding claims, **characterized in that** the tightening member (160) comprises two jaws provided with claws (175, 177) capable of mechanically gripping the projecting parts (12; 42) of the layers (10; 40).

12. The module according to any of the preceding claims, **characterized in that** the tightening member (180) comprises two jaws having teeth.

13. The module according to any of the preceding claims, **characterized in that** the tightening member (100, 120, 140, 160, 180, 200, 220) simultaneously maintains the layers of several elements tightly close together.

14. The module according to any of the preceding claims, **characterized in that** the tightening member (100, 120, 140, 160, 180, 200, 220) is bimetal, consisting of a foil in a material with high elastic properties, such as a cupronickel, surrounding and integral with a foil in a material of high electric conductivity, such as nickel silver.

15. The module according to any of the preceding claims, **characterized in that** the copper foil (70) is interposed between the tightening member (100, 120, 140, 160, 180, 200, 220) and the projecting parts (12; 42) of the layers (10; 40).

16. The module according to any of the preceding claims, **characterized in that** the tightening member (100) has at a longitudinal end, longitudinal slots (101, 103) defining protective flanges (112, 114, 116) without any tightening for the layers tightened by the tightening member.

17. The module according to any of the preceding claims, **characterized in that** the tightening member has on an external portion (102, 104, 106) an electric insulator coating capable of preventing short circuits with an adjacent element.

18. The module according to any of the preceding claims, **characterized in that** the tightening member (100, 120, 140, 160, 180, 200, 220) comprises an elastic clamp clasping the projecting parts of one or more anode layers.

19. The module according to any of the preceding claims, **characterized in that** the tightening member (100, 120, 140, 160, 180, 200, 220) comprises an elastic clamp clasping the projecting parts of one or more collector (10) layers.

20. The module according to any of the preceding claims, **characterized in that** the tightening member (100, 120, 140, 160, 180, 200, 220) comprises a dual clamp clasping on one side the projecting parts of one or more anode layers of a first element and on the other side the projecting parts of one or more collector (10) layers of a second element, both elements being then electrically connected in series.

21. The module according to any of the preceding claims, **characterized in that** the tightening member (100, 120, 140, 160, 180, 200, 220) comprises a dual clamp clasping on each side the projecting parts of one or more anode layers of two neighboring elements in order to electrically connect them in parallel.

22. The module according to any of the preceding claims, **characterized in that** the tightening member (100, 120, 140, 160, 180, 200, 220) comprises two clamps integral with each other respectively clasping the collectors of two elements in order to electrically connect these elements in parallel.

23. The module according to any of the preceding claims, **characterized in that** the tightening member is an elastic member which provides for tightening of the projecting parts (12; 42) under a constant force regardless of the manufacturing disparities of the elements.

24. The module according to any of the preceding claims, **characterized in that** the tightening member has a contact angle on the projecting parts (12; 42) of the layers (10; 40) between 10° and 30°.

25. A method for making an electric connection on a battery module comprising at least one element (1, 2, 3, 4) formed with superimposed layers (10, 20, 30, 40, 50, 60) wound according to a flattened profile, some layers (10, 40) having edges which extend beyond the edges of the other layers (20, 30, 50, 60) thus forming projecting parts (12; 42), said method comprising the placement of a tightening member (100, 120, 140, 160, 180, 200, 220) maintaining the projecting parts (12; 42) of some layers (10; 40) tightly close together, said tightening member appearing as a self-contained elastic member adapted to provide for, by itself, without any external aid, the tightening of said projecting parts and its own grip thereon, and is adapted to provide an electrical connection of the layers to a circuit.

26. The method according to claim 25, **characterized in that** the tightening member (100, 120, 140, 160, 180, 200, 220) being formed with an elastic clamp having two jaws capable of clasping the projecting parts (12; 42) of the layers (10; 40), said method comprising the steps:
- moving the jaws apart of the elastic clamp by means of a tool formed with two elements (108, 110) each element (108, 110) being capable of being engaged in a hook (125, 127) or apertures (221) of one of the jaws (104, 106; 124, 126; 144, 146; 164, 166; 224, 226),
- and then introducing the projecting parts (12; 42) of the layers (10; 40) between the jaws (104, 106; 124, 126; 144, 146; 164, 166; 224, 226),
- releasing the jaws (104, 106; 124, 126; 144, 146; 164, 166; 224, 226) so that they will clasp the projecting parts (12; 42).

27. The method according to claim 26, **characterized in that** the tool includes a stop (223) preventing the jaws of clamp from moving apart beyond the elastic limit of the material of which it consists.

## Patentansprüche

1. Batteriemodul, mindestens ein Element (1, 2, 3, 4) umfassend, das von gemäß einem abgeflachten Profil übereinander gelagerten gewickelten Schichten (10, 20, 30, 40, 50, 60) gebildet wird, wobei bestimmte Schichten (10, 40) Ränder aufweisen, die sich über die Ränder der anderen Schichten (20, 30, 50, 60) erstrecken und somit hervorstehende Abschnitte (12; 42) bilden, und ein Spannorgan (100, 120, 140, 160, 180, 200, 220), das die hervorstehenden Abschnitte (12; 42) bestimmter Schichten (10; 40) gegeneinander gespannt hält, **dadurch gekennzeichnet, dass** das Spannorgan ein unabhängiges elastisches Organ ist, das durch sich selbst ohne Hilfe von außen das Spannen der hervorstehenden Abschnitte (12; 42) und seinen eigenen Halt auf diesen gewährleistetet und imstande ist, eine elektrische Verbindung der Schichten (10; 40) mit einem Stromkreis zu gewährleisten.

2. Modul nach Anspruch 1, **dadurch gekennzeichnet, dass** das Spannorgan (100, 120, 140, 160, 180, 200, 220) von einer elastischen Zange gebildet wird, die zwei Backen aufweist, die imstande sind, die hervorstehenden Abschnitte (12; 42) der Schichten (10; 40) zu spannen.

3. Modul nach Anspruch 2, **dadurch gekennzeichnet, dass** die Zange aus einer gebogenen Metallplatte geformt ist, um die Spannbacken zu bilden.

4. Modul nach Anspruch 3, **dadurch gekennzeichnet, dass** die freien Enden der Backen gemäß einem Krümmungsradius von über 0,6 mm nach außen gebogen sind.

5. Modul nach einem der Ansprüche 2 bis 4, **dadurch gekennzeichnet, dass** die freien Enden der Backen im Winkel gebogen sind und längliche Langlöcher (221) aufweisen, die imstande sind, die Zähne (229) eines Platzierungswerkzeugs (228, 230) aufzunehmen.

6. Modul nach einem der Ansprüche 2 bis 5, **dadurch gekennzeichnet, dass** die Zange eine maximale Öffnungskraft von 160 N aufweist.

7. Modul nach einem der Ansprüche 1 bis 6, **dadurch gekennzeichnet, dass** das Spannorgan (100, 120, 140, 160, 180, 200, 220) aus Metall ist.

8. Modul nach Anspruch 7, **dadurch gekennzeichnet, dass** das Spannorgan mit einem elektrisch leitenden Element (170) verbunden ist, das imstande ist, die Schichten (10; 40), die vom Spannorgan (100, 120, 140, 160, 180, 200, 220) gespannt gehalten werden, mit einem Stromkreis elektrisch zu verbinden.

9. Modul nach einem der vorangehenden Ansprüche, **dadurch gekennzeichnet, dass** das Spannorgan imstande ist, seinen eigenen Halt auf den hervorstehenden Abschnitten (12; 42) der Schichten (10; 40) zu gewährleisten und eine elektrische Verbindung dieser während einer Dauer über der Lebensdauer des Moduls.

10. Modul nach einem der vorangehenden Ansprüche, **dadurch gekennzeichnet, dass** das Spannorgan (100, 120, 140, 160, 180, 200, 220) auf die hervorstehenden Abschnitte (12; 42) der Schichten (10; 40) eine Spannkraft von über 50 N ausübt.

11. Modul nach einem der vorangehenden Ansprüche, **dadurch gekennzeichnet, dass** das Spannorgan (160) zwei mit Krallen (175, 177) ausgestattete Backen umfasst, die imstande sind, die hervorstehenden Abschnitte (12; 42) der Schichten (10; 40) mechanisch zu ergreifen.

12. Modul nach einem der vorangehenden Ansprüche, **dadurch gekennzeichnet, dass** das Spannorgan (180) zwei Backen umfasst, die Zähne aufweisen.

13. Modul nach einem der vorangehenden Ansprüche, **dadurch gekennzeichnet, dass** das Spannorgan (100, 120, 140, 160, 180, 200, 220) die Schichten mehrerer Elemente gleichzeitig gegeneinander gespannt hält.

14. Modul nach einem der vorangehenden Ansprüche, **dadurch gekennzeichnet, dass** das Spannorgan (100, 120, 140, 160, 180, 200, 220) bimetallisch ist und von einer Platte aus einem Metall mit hohen elastischen Eigenschaften wie Kupfernickel gebildet wird, das verbindend eine Platte aus einem Material mit einer hohen elektrischen Leitfähigkeit wie Neusilber umgibt.

15. Modul nach einem der vorangehenden Ansprüche, **dadurch gekennzeichnet, dass** zwischen dem Spannorgan (100, 120, 140, 160, 180, 200, 220) und den hervorstehenden Abschnitten (12; 42) der Schichten (10; 40) eine Kupferplatte (70) zwischengestellt ist.

16. Modul nach einem der vorangehenden Ansprüche, **dadurch gekennzeichnet, dass** das Spannorgan (100) auf Ebene eines länglichen Endes längliche Schlitze (101, 103) aufweist, das Schutzlaschen (112, 114, 116) ohne Spannung für die vom Spannorgan gespannten Schichten definiert.

17. Modul nach einem der vorangehenden Ansprüche, **dadurch gekennzeichnet, dass** das Spannorgan auf einem äußeren Abschnitt (102, 104, 106) einen elektrisch isolierenden Überzug aufweist, der imstande ist, Kurzschlüsse mit einem benachbarten Element zu verhindern.

18. Modul nach einem der vorangehenden Ansprüche, **dadurch gekennzeichnet, dass** das Spannorgan (100, 120, 140, 160, 180, 200, 220) eine elastische Zange aufweist, die die hervorstehenden Abschnitte einer oder mehrerer Anodenschicht(en) spannt.

19. Modul nach einem der vorangehenden Ansprüche, **dadurch gekennzeichnet, dass** das Spannorgan (100, 120, 140, 160, 180, 200, 220) eine elastische Zange aufweist, die die hervorstehenden Abschnitte einer oder mehrerer Kollektorschicht(en) spannt.

20. Modul nach einem der vorangehenden Ansprüche, **dadurch gekennzeichnet, dass** das Spannorgan (100, 120, 140, 160, 180, 200, 220) eine Doppelzange aufweist, die auf einer Seite die hervorstehenden Abschnitte einer oder mehrerer Anodenschicht(en) eines ersten Elements und auf der anderen Seite die hervorstehenden Abschnitte einer oder mehrerer Kollektorschicht(en) (10) eines zweiten Elements spannt, wodurch die zwei Elemente dann elektrisch in Reihe verbunden sind.

21. Modul nach einem der vorangehenden Ansprüche, **dadurch gekennzeichnet, dass** das Spannorgan (100, 120, 140, 160, 180, 200, 220) eine Doppelzange aufweist, die auf jeder Seite die hervorstehenden Abschnitte einer oder mehrerer Anodenschicht(en) zweier benachbarter Elemente spannt, um sie elektrisch parallel zu verbinden.

22. Modul nach einem der vorangehenden Ansprüche, **dadurch gekennzeichnet, dass** das Spannorgan (100, 120, 140, 160, 180, 200, 220) zwei verbundene Zangen umfasst, die jeweils die Kollektoren von zwei Elementen spannt, um diese Elemente elektrisch parallel zu verbinden.

23. Modul nach einem der vorangehenden Ansprüche, **dadurch gekennzeichnet, dass** das Spannorgan ein elastisches Organ ist, das eine Spannung der hervorstehenden Abschnitte (12; 42) mit konstanter Kraft gewährleistet, unabhängig von den Unterschieden bei der Herstellung der Elemente.

24. Modul nach einem der vorangehenden Ansprüche, **dadurch gekennzeichnet, dass** das Spannorgan einen Anlegewinkel auf den hervorstehenden Abschnitten (12; 42) der Schichten (10; 40) zwischen 10° und 30° inklusive aufweist.

25. Verfahren zur Herstellung einer elektrischen Verbindung auf einem Batteriemodul, mindestens ein Element (1, 2, 3, 4) umfassend, das von gemäß einem abgeflachten Profil übereinander gelagerten gewickelten Schichten (10, 20, 30, 40, 50, 60) gebildet wird, wobei bestimmte Schichten (10, 40) Ränder aufweisen, die sich über die Ränder der anderen Schichten (20, 30, 50, 60) erstrecken und somit hervorstehende Abschnitte (12; 42) bilden, wobei das Verfahren die Platzierung eines Spannorgans (100, 120, 140, 160, 180, 200, 220) umfasst, das die hervorstehenden Abschnitte (12; 42) bestimmter Schichten (10; 40) gegeneinander gespannt hält, wobei das Spannorgan ein unabhängiges elastisches Organ ist, das durch sich selbst ohne Hilfe von außen das Spannen der hervorstehenden Abschnitte und seinen eigenen Halt auf diesen gewährleistetet und imstande ist, eine elektrische Verbindung der Schichten mit einem Stromkreis zu gewährleisten.

26. Verfahren nach Anspruch 25, **dadurch gekennzeichnet, dass** das Spannorgan (100, 120, 140, 160, 180, 200, 220) von einer elastischen Zange gebildet wird, die zwei Backen aufweist, die imstande sind, die hervorstehenden Abschnitte (12; 42) der Schichten (10; 40) zu spannen, wobei das Verfahren die folgenden Schritte umfasst, die bestehen in:
- Spreizen der Backen der elastischen Zange mit Hilfe eines aus zwei Elementen (108, 110) gebildeten Werkzeugs, wobei jedes Element (108, 110) imstande ist, in einen Haken (125, 127) oder Öffnungen (221) einer der Backen (104, 106; 124, 126; 144, 146; 164, 166; 224, 226) einzugreifen,
- danach Führen der hervorstehenden Abschnitte (12; 42) der Schichten (10; 40) zwischen die Backen (104, 106; 124, 126; 144, 146; 164, 166; 224, 226),
- Loslassen der Backen (104, 106; 124, 126; 144, 146; 164, 166; 224, 226) derart, dass sie die hervorstehenden Abschnitte (12; 42) spannen.

27. Verfahren nach Anspruch 26, **dadurch gekennzeichnet, dass** das Werkzeug einen Anschlag (223) aufweist, der das Spreizen der Backen der Zange über die elastische Grenze des Materials hinaus, das sie bildet, verhindert.
